# EUROPÄISCHE PATENTSCHRIFT

(11) **EP 1 924 418 B1**
(45) Veröffentlichungstag und Bekanntmachung des Hinweises auf die Patenterteilung: **20.04.2011**
(21) Anmeldenummer: 06792883.8
(22) Anmeldetag: 18.08.2006
(51) Int. Cl.: B29C 45/38, B29C 45/56, A47J 43/07

(54) **GEFÄSS FÜR EIN HAUSHALTSGERÄT SOWIE VERFAHREN UND SPRITZGUSSFORM ZU DESSEN HERSTELLUNG**
RECEPTACLE FOR A HOUSEHOLD APPLIANCE AND METHOD AND INJECTION MOULD FOR THE PRODUCTION THEREOF
CONTENANT POUR APPAREIL MENAGER, PROCEDE ET MOULE D'INJECTION POUR LE REALISER

(30) Priorität: 02.09.2005 DE 102005041796
(43) Veröffentlichungstag der Anmeldung: 28.05.2008
(73) Patentinhaber: BSH Bosch und Siemens Hausgeräte GmbH, 81739 München (DE)
(72) Erfinder: LESKOVSEK, Peter, 3333 Ljubno Ob Savinji (SI); GOJSIC, Slaven, 10.000 Zagreb (HR); KACZMAREK, Fred, 61678 Bergisch Gladbach (DE)
(86) Internationale Anmeldenummer: PCT/EP2006/065435
(87) Internationale Veröffentlichungsnummer: WO 2007/025874

(56) Entgegenhaltungen:
- WO-A-02/28248
- WO-A-03/001954
- WO-A-03/020491
- FR-A- 2 109 327
- JP-A- 57 087 339
- US-A- 5 346 659

## Beschreibung

Die Erfindung betrifft ein Verfahren zur Herstellung eines einen Durchbruch aufweisenden Gefäßes für ein Haushalsgerät, insbesondere zur Herstellung eines Mixerbechers. Die Erfindung betrifft weiterhin eine Spritzgussform gemäß dem Oberbegriff des Anspruchs 5 und ein Gefäß gemäß dem Oberbegriff des Anspruchs 8.

Beispielsweise bei der Herstellung von Kunststoffbechern von Standmixern ist es Stand der Technik, in der Bodenfläche des fertig gegossenen Kunststoffbechers eine zentrierte Kreisöffnung durch spanendes Bohren einzubringen. Die Kreisöffnung dient zur Aufnahme einer Wellenlagerung für den rotierenden Messerkopf. Ein Nachteil beim Bohren ist die geringe zentrierte Maßhaltigkeit (beispielsweise ± 0,3 mm), wodurch es zu einer exzentrischen Ankopplung an die Antriebseinheit und dadurch zu lauten Betriebsgeräuschen und einer schnellen Abnutzung kommt.

Die US-A- 5 346 659 offenbart ein Verfahren gemäß dem Oberbegriff des Anspruchs 1, zur Herstellung eines einen Durchbruch aufweisenden zylindrischen Gefäßes mittels eines Schneidemittels, eine Spritzgussform, gemäß dem Oberbegriff des Anspruch 4, ein Gefäß, gemäß dem Oberbegriff des Anspruchs 7. JP 57 087339 A offenbart eine Vorrichtung zum Herstellen eines Drehzapfens mit Hilfe einer Spritzgussform und ferner offenbart die WO 031001954 A1 einen Mixerbehälter mit einer Öffnung im Behälterboden.

Die Aufgabe der Erfindung besteht darin, die Herstellung eines für Haushaltsgeräte vorgesehenen Gefäßes zu ermöglichen, dass einen Durchbruch aufweist, der höchst präzise positioniert und geformt ist, um die vorstehend erläuterten Nachteile zu beseitigen.

Diese Aufgabe wird durch die Merkmale der unabhängigen Ansprüche gelöst.

Vorteilhafte Ausführungsformen und Weiterbildungen der Erfindung ergeben sich aus den abhängigen Ansprüchen.

Das erfindungsgemäße Verfahren zur Herstellung eines einen Durchbruch aufweisenden Gefäßes für ein Haushaltsgerät, insbesondere zur Herstellung eines Mixerbechers, umfasst die folgenden Schritte:
- Vorsehen einer Spritzgussform, die zumindest zwei Formteile umfasst, von denen das erste Formteil der Gefäßinnenseite und das zweite Formteil der Gefäßaußenseite zugeordnet ist, wobei in zumindest einem der Formteile ein axial beweglicher Stempel angeordnet ist,
- Einbringen von Spritzgussmaterial in die Spritzgussform, und
- Schaffen des Durchbruchs durch Bewegen des Stempels, bevor das Spritzgussmaterial vollständig ausgehärtet ist.

Ein ähnliches Verfahren ist unter der Bezeichnung "Soft-Cut" aus dem Bereich der CD-Herstellung bekannt und beispielsweise in der WO 03/020491 A1 beschrieben. Der Erfindung liegt die Erkenntnis zugrunde, dass das zur CD-Herstellung bekannte Verfahren sich derart abwandeln lässt, dass Durchbrüche in Gefäßen für Haushaltsgeräte mit hoher Präzision geschaffen werden können. Durch das erfindungsgemäße Verfahren können in den Gefäßen für Haushaltsgeräte Durchbrüche mit einer hohen Maßhaltigkeit von beispielsweise ± 0,01 mm oder sogar ± 0,005 mm geschaffen werden. Da der Durchbruch direkt bei der Herstellung des Gefäßes erzeugt wird, kann auf einen zusätzlichen Bearbeitungsschritt wie das bisher vorgesehene Bohren verzichtet werden. Als Spritzgussmaterialien kommen alle auch bisher im Zusammenhang mit Gefäßen für Haushaltsgeräte eingesetzten Materialien in Betracht, insbesondere Kunststoffe.

Bei einer bevorzugten Ausführungsform des erfindungsgemäßen Verfahrens ist vorgesehen, dass der Durchbruch kreisförmig und in der Mitte des Gefäßbodens geschaffen wird. Derartige Durchbrüche sind beispielsweise im Zusammenhang mit Küchenmaschinen erforderlich, um eine Antriebswelle hindurchführen zu können oder eine Kupplung einzusetzen.

Zusätzlich oder alternativ kann bei dem erfindungsgemäßen Verfahren vorgesehen sein, dass der Durchbruch auf der Kuppe eines Doms geschaffen wird. Ein derartiger Dom ist beispielsweise bei Mixerbechern üblich, wobei der Dom in einem derartigen Fall ein Kupplungselement der Antriebsvorrichtung zumindest teilweise aufnimmt, wenn der Mixerbecher auf den Mixer beziehungsweise die Antriebseinheit aufgesetzt ist.

Bei einer besonders bevorzugten Ausführungsform des erfindungsgemäßen Verfahrens ist vorgesehen, dass der Stempel beim Schaffen des Durchbruchs mit einer das Spritzgussmaterial zuführenden Düse zusammenwirkt und dass das zur Schaffung des Durchbruchs durch den Stempel verschobene Spritzgussmaterial zusammen mit einem Anguss entfernt wird. Als Anguss wird das (ausgehärtete) Spritzgussmaterial bezeichnet, dass sich in die zum Spritzgießen verwendete Düse erstreckt. Wenn beispielsweise der Stempel so ausgelegt ist, dass er sich abschnittsweise in einen sich konisch erweiternden Bereich der Düse erstrecken kann, bis er umlaufend anschlägt, kann das zur Schaffung des Durchbruchs durch den Stempel verschobene Spritzgussmaterial zusammen mit dem Anguss entfernt werden.

Die erfindungsgemäße Spritzgussform baut auf dem gattungsgemäßen Stand der Technik dadurch auf, dass in zumindest einem der Formteile ein Stempel angeordnet ist, der zur Schaffung eines in dem Gefäß vorgesehenen Durchbruchs bewegt werden kann. Eine derartige Spritzgussform ist zur Verwendung mit dem erfindungsgemäßen Verfahren geeignet und führt daher zu den Eigenschaften und Vorteilen, die bereits im Zusammenhang mit dem erfindungsgemäßen Verfahren erläutert wurden. Auf die entsprechenden Ausführungen wird zur Vermeidung von Wiederholungen verwiesen.

Die erfindungsgemäße Spritzgussform ist in vorteilhafter Weise dadurch weitergebildet, dass der Stempel in dem der Gefäßinnenseite zugeordneten Formteil angeordnet ist. In diesem Fall ist es in vorteilhafter Weise möglich, dass Spritzgussmaterial über das Formteil zuzuführen, das der Gefäßaußenseite zugeordnet ist, so dass an diesem Formteil im Vergleich zum Stand der Technik praktisch keine Änderungen erforderlich sind.

Für die erfindungsgemäße Spritzgussform wird es als besonders vorteilhaft erachtet, dass der Stempel gegenüber einer zur Zuführung von Spritzgussmaterial vorgesehenen Düse angeordnet und auf diese zu beziehungsweise von dieser weg bewegbar ist. Auf diese Weise ist es möglich, dass zur Schaffung des Durchbruchs durch den Stempel verschobene Spritzgussmaterial zusammen mit dem Anguss zu entfernen, wie dies im Zusammenhang mit dem erfindungsgemäßen Verfahren erläutert wurde.

Das erfindungsgemäße Gefäß für ein Haushaltsgerät baut auf dem gattungsgemäßen Stand der Technik dadurch auf, dass die Istposition des Durchbruchs um weniger als ± 0,01mm von der Sollposition des Durchbruchs abweicht. In vielen Fällen lassen sich sogar noch geringere Toleranzen von beispielsweise ± 0,005 mm oder weniger erzielen. Was die Formgebung des Durchbruchs angeht, werden ähnlich kleine Toleranzen wie bei der Positionierung ermöglicht. Beispielsweise ermöglicht es das erfindungsgemäße Gefäß, dass ein Mixer geräuscharm läuft und eine im Vergleich zum Stand der Technik größere Lebensdauer erreicht.

Ohne darauf beschränkt zu sein, kann bei dem erfindungsgemäßen Gefäß vorgesehen sein, dass die Sollposition in der Mitte des Gefäßbodens liegt.

In vielen Fällen ist es bei dem erfindungsgemäßen Gefäß erforderlich, dass der Durchbruch als kreisförmiger Durchbruch vorgesehen ist. In diesem Fall weicht der geschaffene Durchbruch nur äußerst geringfügig von der idealen Kreisform ab, beispielsweise mit weniger als ± 0,005 mm.

Insbesondere im Zusammenhang mit Mixerbechern kann vorgesehen sein, dass der Durchbruch auf der Kuppe eines Doms angeordnet ist. Wie erwähnt, kann ein derartiger Dom dazu dienen, ein Kupplungselement der Antriebsvorrichtung zumindest teilweise aufzunehmen, wenn der Mixerbecher auf den Mixer aufgesetzt ist.

Der Erfindung liegt die Erkenntnis zugrunde, dass es möglich ist, dass aus dem Bereich der CD-Herstellung bekannte "Soft-Cut"-Vefahren in abgewandelter Form zur Herstellung von Gefäßen für Haushaltsgeräte zu verwenden, um Durchbrüche mit höchster Präzision zu schaffen.

Bevorzugte Ausführungsbeispiele der Erfindung werden nachfolgend anhand der zugehörigen Zeichnungen beispielhaft erläutert.

Es zeigen:
- Figur 1: eine schematische Schnittansicht einer Ausführungsform eines erfindungsgemäßen Gefäßes für ein Haushaltsgerät, nämlich eine schematische Schnittansicht eines Mixerbechers;
- Figur 2: eine schematische Schnittansicht durch eine Ausführungsform der erfindungsgemäßen Spritzgussform, die zur Durchführung des erfindungsgemäßen Verfahrens geeignet ist; und
- Figur 3: das Detail A von Figur 2 in vergrößerter Darstellung.

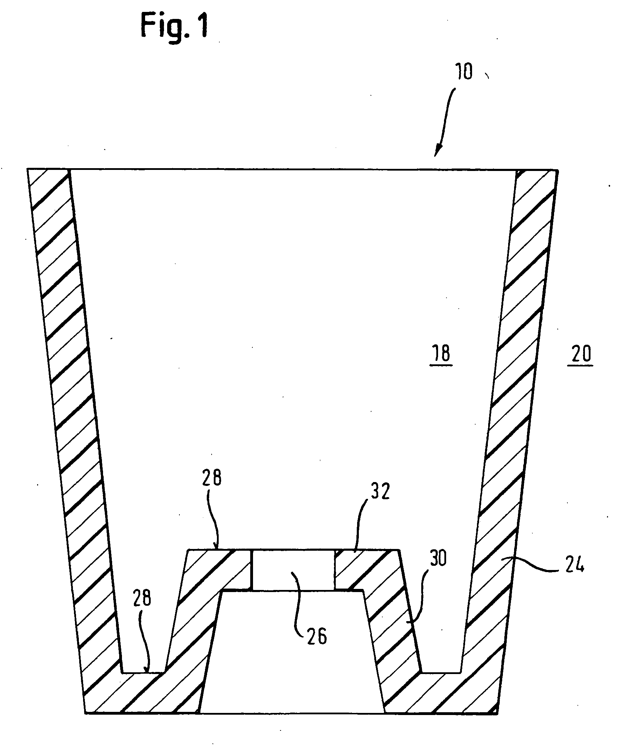

Der in Figur 1 schematisch im Schnitt gezeigte Mixerbecher 10 ist aus Spritzgussmaterial 24 in Form von Kunststoff hergestellt und umfasst einen Dom 30, in dem (nicht dargestellte) Elemente der Antriebsvorrichtung aufgenommen werden, wenn der Mixerbecher 10 auf den Mixer aufgesetzt ist. In der Kuppe 32 des Doms 30 befindet sich ein kreisförmiger Durchbruch 26, der erfindungsgemäß mit einer hohen Maßhaltigkeit von beispielsweise ±0,005 mm hergestellt ist. Die große Maßheitigkeit des Durchbruchs 26 ermöglicht eine zentrische Ankopplung an die Antriebseinheit, was zu einem geräuscharmen Betrieb und einer hohen Lebensdauer führt.

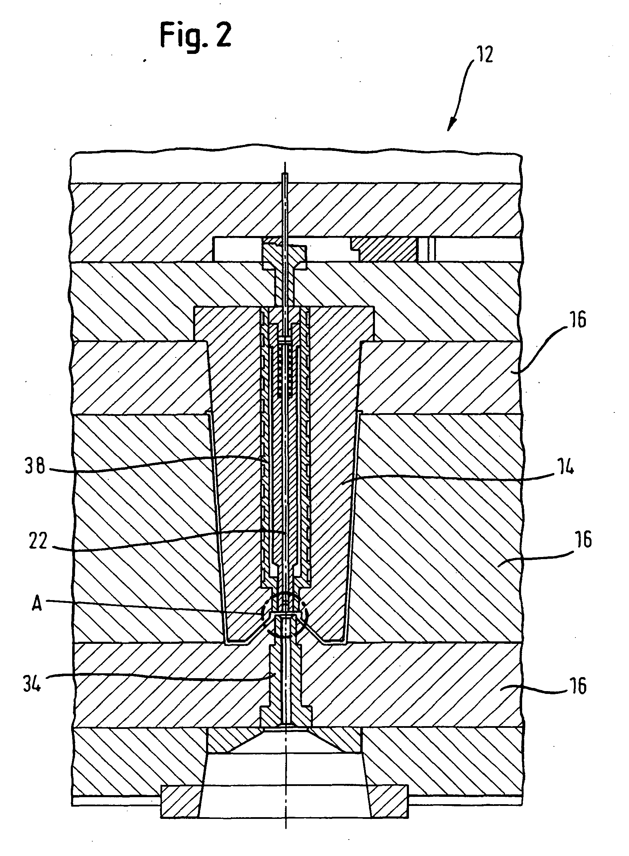

Der in Figur 1 dargestellte Mixerbecher 10 kann in vorteilhafter Weise durch das erfindungsgemäße Verfahren hergestellt werden, wobei die erfindungsgemäße Spritzgussform zum Einsatz kommen kann, die zumindest einen der Gefäßinnenseite 18 zugeordneten Formteil und einen der Gefäßaußenseite 20 zugeordneten Formteil umfasst, wie dies nachfolgend anhand von Figur 2 näher erläutert wird.

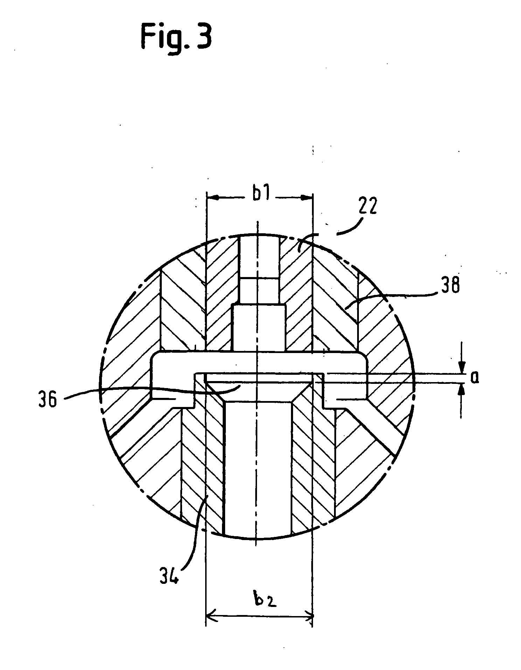

Figur 2 zeigt eine schematische Schnittansicht durch eine Ausführungsform der erfindungsgemäßen Spritzgussform, die zur Durchführung des erfindungsgemäßen Verfahrens geeignet ist. Die Spritzgussform 12 weist einen ersten Formteil 14 auf, das der Gefäßinnenseite 18 (siehe Figur 1) zugeordnet ist. Weiterhin umfasst die Spritzgussform 12 ein aus verschiedenen Komponenten (siehe unterschiedliche Schraffuren) zusammengesetztes zweites Formteil 16, das der Gefäßaußenseite 20 (siehe Figur 1) zugeordnet ist. Zwischen dem ersten Formteil 14 und dem zweiten Formteil 16 wird ein Spalt gebildet, der mit Sprüzgussmaterial zu füllen ist. Im Inneren des ersten Formteils 14 ist ein Stempel 22 vorgesehen, der durch eine Stempelführung 38 geführt wird. Der Stempel 22 kann beispielsweise hydraulisch, pneumatisch und/oder mechanisch in axialer Richtung bewegt werden, bezogen auf die Darstellung von Figur 2 zumindest nach Unten. Der Stempel 22 ist gegenüber einer Düse 34 angeordnet, die in dem zweiten Formteil 16 angeordnet und zum Einspritzen des Spritzgussmaterials vorgesehen ist. In Figur 3, die das Detail A von Figur 2 in vergrößerter Darstellung zeigt, ist zu erkennen, dass der Durchmesser b1 des Stempels 22 etwas kleiner als der breiteste Durchmesser b2 einer sich konisch erweiternden Düsenöffnung 36 gewählt ist. Wird der Stempel 22 nach Unten bewegt, so führt dies dazu, dass er sich um eine Strecke a in die Düsenöffnung 36 hineinbewegt. Dies hat den Vorteil, dass das zur Schaffung des Durchbruchs 26 (siehe Figur 1) durch den Stempel 22 verschobene, noch nicht ausgehärtete Spritzgussmaterial nach dem Aushärten zusammen mit dem Anguss entfernt werden kann, der sich im Bereich der Düsenöffnung 36 befindet. Der den Durchbruch (siehe Figur 1) begrenzende Umfang kann auf diese Weise mit einem Verstärkungssteg versehen werden, der ungefähr die Höhe a aufweist. Ist ein derartiger Steg nicht erwünscht, so kann der Durchmesser b1 des Stempels 22 an den Durchmesser b2 der Düsenöffnung 36 angepasst werden.

Der in Figur 1 dargestellte Mixerbecher lässt sich anhand der Figuren 2 und 3 erläuterten Spritzgussform durch die Durchführung des erfindungsgemäßen Verfahrens wie folgt herstellen: zunächst wird die Spritzgussform 12 vorgesehen, die zwei Formteile 14, 16 umfasst, von denen das erste Formteil 14 der Gefäßinnenseite 18 (siehe Figur 1) und das zweite Formteil 16 der Gefäßaußenseite 20 (siehe Figur 1) zugeordnet ist, wobei in dem ersten Formteil 14 der axial bewegliche Stempel 22 angeordnet ist. Anschließend wird Spritzgussmaterial in die Spritzgussform 12 eingebracht, und zwar über die zu diesem Zweck vorgesehene Düse 34. Bevor das Spritzgussmaterial 24 vollständig ausgehärtet ist, wird ein Durchbruch 26 (siehe Figur 1) durch Bewegen des Stempels 22 nach Unten geschaffen. Der Durchbruch ist auf der Kuppe 32 eines Doms 30 und in der Mitte des Gefäßbodens 28 angeordnet und kreisförmig (siehe Figur 1). Wie dies bereits erläutert wurde, wirkt der Stempel 22 beim Schaffen des Durchbruchs 26 mit der das Spritzgussmaterial zuführenden Düse 34 zusammen, um dass zur Schaffung des Durchbruchs 26 durch den Stempel 22 verschobene Spritzgussmaterial zusammen mit dem Anguss entfernen zu können.

Die in der vorstehenden Beschreibung, in den Zeichnungen, sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Gefäß/Mixerbecher
- 12: Spritzgussform
- 14: erstes Formteil
- 16: zweites Formteil
- 18: Gefäßinnenseite
- 20: Gefäßaußenseite
- 22: Stempel
- 24: Spritzgussmaterial
- 26: Durchbruch
- 28: Gefäßboden
- 30: Dom
- 32: Kuppe
- 34: Düse
- 36: Düsenöffnung
- 38: Stempelführung

## Patentansprüche

1. Verfahren zur Herstellung eines einen Durchbruch (26) aufweisenden Gefäßes (10) für ein Haushaltsgerät, insbesondere zur Herstellung eines Mixerbechers, mit den folgenden Schritten:
- Vorsehen einer Spritzgussform (12), die zumindest zwei Formteile (14, 16) umfasst, von denen das erste Formteil (14) der Gefäßinnenseite (18) und das zweite Formteil (16) der Gefäßaußenseite (20) zugeordnet ist, wobei in zumindest einem der Formteile (14, 16) ein axial beweglicher Stempel (22) angeordnet ist,
- Einbringen von Spritzgussmaterial (24) in die Spritzgussform (12), und
- Schaffen des Durchbruchs (26) durch Bewegen des Stempels.(22), bevor das Spritzgussmaterial (24) vollständig ausgehärtet ist,
**dadurch gekennzeichnet, dass** der Stempel (22) beim Schaffen des Durchbruchs (26) mit einer das Spritzgussmaterial zuführenden Düse (34) zusammenwirkt und dass das zur Schaffung des Durchbruchs (26) durch den Stempel (22) verschobene Spritzgussmaterial zusammen mit einem Anguss entfernt wird, wobei der Stempel (22) sich um eine Strecke (a) in eine Düsenöffnung (36) hineinbewegt, wobei der Durchmesser (b1) des Stempels (22) etwas Kleiner als der breiteste Durchmesser (b2) einer der sich Konisch erweiternden Düsenöffnung (36) gewählt ist,
um den Durchbruch (26) mit einem Verstärkungssteg, der ungefähr die Höhe der Strecke (a) aufweist, zu versehen.

2. Verfahren nach Anspruch 1, **dadurch gekennzeichnet, dass** der Durchbruch (26) kreisförmig und in der Mitte des Gefäßbodens (28) geschaffen wird.

3. Verfahren nach Anspruch 1 oder 2, **dadurch gekennzeichnet, dass** der Durchbruch (26) auf der Kuppe (32) eines Doms (30) geschaffen wird.

4. Spritzgussform (12) zur Verwendung in dem Verfahren nach einem der vorhergehenden Ansprüche, zur Herstellung eines Gefäßes (10) für ein Haushaltsgerät, insbesondere zur Herstellung eines Mixerbechers, wobei die Spritzgussform (12) zumindest zwei Formteile (14, 16) aufweist, von denen das erste Formteil (14) der Gefäßinnenseiten (18) und das zweite Formteil (16) der Gefäßaußenseite (20) zugeordnet ist, wobei in zumindest einem der Formteile (14, 16) ein Stempel (22) angeordnet ist, der zur Schaffung eines in dem Gefäß (10) vorgesehenen Durchbruchs (26) bewegt werden kann **dadurch gekennzeichnet, dass** der Stempel (22) sich um eine Strecke (a) in eine Düsenöffnung (36)
hineinbewegt, wobei der Durchmesser (b1) des Stempels (22) etwas Kleiner als der breiteste Durchmesser (b2) einer der sich Konisch erweiternden Düsenöffnung (36) gewählt ist, um den Durchbruch (26) mit einem Verstärkungssteg , der ungefähr die Höhe der Strecke (a) aufweist, zu versehen.

5. Spritzgussform (12) nach Anspruch 5 4, **dadurch gekennzeichnet, dass** der Stempel (22) in dem der Gefäßinnenseite (18) zugeordneten Formteil (14) angeordnet ist.

6. Spritzgussform (12) nach Anspruch 4 oder 5, **dadurch gekennzeichnet, dass** der Stempel (22) gegenüber einer zur Zuführung von Spritzgussmaterial vorgesehenen Düse (34) angeordnet und auf diese zu beziehungsweise von dieser weg bewegbar ist.

7. Gefäß (10) für ein Haushaltsgerät hergestellt mit dem Verfahren nach einem der Ansprüche 1 bis 3 und/oder mit der Spritzgussform nach einem der Ansprüche 5 bis 7, insbesondere Mixerbecher, mit einem Durchbruch (26), der an einer Sollposition vorgesehen und an einer Istposition gebildet ist, **dadurch gekennzeichnet, dass** die Istposition des Durchbruchs (26) um weniger als ± 0,01 mm von der Sollposition des Durchbruchs abweicht, **dadurch gekennzeichnet, dass** der Durchbruch (26) einen Verstärkungssteg aufweist.

8. Gefäß (10) nach Anspruch 7, **dadurch gekennzeichnet, dass** die Sollposition in der Mitte des Gefäßbodens (28) liegt.

9. Gefäß (10) nach Anspruch 7 oder 8, **dadurch gekennzeichnet, dass** der Durchbruch (26) als kreisförmiger Durchbruch vorgesehen ist.

10. Gefäß (10) nach einem der Ansprüche 7 bis 9, **dadurch gekennzeichnet, dass** der Durchbruch (26) auf der Kuppe (32) eines Doms (30) angeordnet ist.

## Claims

1. Method of producing a vessel (10), which has a passage (26), for a domestic appliance, particularly for producing a mixer beaker, comprising the following steps:
- providing an injection-moulding mould (12) comprising at least two mould parts (14, 16), of which the first mould part (14) is associated with the vessel inner side (18) and the second mould part (16) with the vessel outer side (20), wherein an axially movable plunger (22) is arranged in at least one of the mould parts (14, 16),
- introducing injection-moulding material (24) into the injection-moulding mould (12) and
- creating the passage (26) by moving the plunger (22) before the injection-moulding material (24) has completely hardened.
**characterised in that** the plunger (22) for creation of the passage (26) co-operates with a nozzle (34) feeding the injection-moulding material and that the injection-moulding material displaced by the plunger (22) for creating the passage (26) is removed together with a runner, wherein the plunger (22) is moved by a travel (a) into a nozzle opening (36) and wherein the diameter (b1) of the plunger (22) is selected to be somewhat smaller than the widest diameter (b2) of a conically widening nozzle opening (36) in order to provide the passage (26) with a reinforcing web having approximately the height of the travel (a).

2. Method according to claim 1, **characterised in that** the passage (26) is formed to be circular and in the middle of the vessel base (28).

3. Method according to claim 1 or 2, **characterised in that** the passage (26) is formed on the summit (32) of a dome (30).

4. Injection-moulding mould (12) for use in the method according to any one of the preceding claims, for producing a vessel (10) for a domestic appliance, particularly for producing a mixer beaker, wherein the injection-moulding mould (12) comprises at least two mould parts (14, 16), of which the first mould part (14) is associated with the vessel inner sides (18) and the second mould part (16) with the vessel outer side (20), wherein a plunger (22) which can be moved for creating a passage (26) provided in the vessel (10) is arranged in at least one of the mould parts (14, 16), **characterised in that** the plunger (22) moves over a travel (a) into a nozzle opening (36) and wherein the diameter (b1) of the plunger (22) is selected to be somewhat smaller than the widest diameter (b2) of a conically widening nozzle opening (36) so as to provide the passage (26) with a reinforcing web having approximately the height of the travel (a).

5. Injection-moulding mould (12) according to claim 4, **characterised in that** the plunger (22) is arranged in the mould part (14) associated with the vessel inner side (18).

6. Injection-moulding mould (12) according to claim 4 or 5, **characterised in that** the plunger (22) is arranged opposite a nozzle (34) provided for feed of injection-moulding material and is movable towards or away from this.

7. Vessel (10) for a domestic appliance, produced by the method according to any one of claims 1 to 3 and/or by the injection-moulding mould according to any one of claims 5 to 7, particularly a mixer beaker, with a passage (26) which is intended at a desired position and formed at an actual position, **characterised in that** the actual position of the passage (26) deviates from the desired position of the passage by less than plus or minus 0.01 millimetres.

8. Vessel (10) according to claim 7, **characterised in that** the desired position lies in the centre of the vessel base (28).

9. Vessel (10) according to claim 7 or 8, **characterised in that** the passage (26) is provided as a circular passage.

10. Vessel (10) according to any one of claims 7 to 9, **characterised in that** the passage (26) is arranged on the summit (32) of a dome (30).

## Revendications

1. Procédé pour fabriquer un récipient (10) présentant un passage (26) pour un appareil ménager, en particulier pour fabriquer un gobelet mixeur, comprenant les étapes suivantes :
- prévoir un moule d'injection (12), qui comporte au moins deux parties de moule (14, 16), dont la première partie de moule (14) est attribuée au côté intérieur du récipient (18) et la seconde partie de moule (16) au côté extérieur du récipient (20), un poinçon (22) mobile axialement étant disposé dans au moins l'une des parties de moule (14, 16),
- introduction de matière de moulage par injection (24) dans le moule d'injection (12), et
- création du passage (26) par déplacement du poinçon (22) avant que la matière de moulage par injection (24) soit complètement durcie,
**caractérisé en ce que** le poinçon (22) coopère lors de la création du passage (26) avec une buse (34) amenant la matière de moulage par injection et **en ce que** la matière de moulage par injection déplacée par le poinçon (22) pour la création du passage (26) est enlevée conjointement avec une entrée d'injection, le poinçon (22) se déplaçant d'un tronçon (a) à l'intérieur d'une ouverture de buse (36), le diamètre (b1) du poinçon (22) étant choisi légèrement inférieur au diamètre le plus large (b2) d'une ouverture de buse (36) s'élargissant en forme de cône afin de doter le passage (26) d'une nervure de renfort qui présente à peu près la hauteur du tronçon (a).

2. Procédé selon la revendication 1, **caractérisé en ce que** le passage (26) est de forme circulaire et est créé au centre du fond de récipient (28).

3. Procédé selon la revendication 1 ou 2, **caractérisé en ce que** le passage (26) est créé sur le sommet (32) d'un dôme (30).

4. Moule d'injection (12) destiné à une utilisation dans le procédé selon l'une quelconque des revendications précédentes, pour fabriquer un récipient (10) pour un appareil ménager, en particulier pour fabriquer un gobelet mixeur, le moule d'injection (12) comprenant au moins deux parties de moule (14, 16), dont la première partie de moule (14) est attribuée au côté intérieur du récipient (18) et la seconde partie de moule (16) au côté extérieur du récipient (20), un poinçon (22) étant disposé dans au moins l'une des parties de moule (14, 16), lequel poinçon peut être déplacé pour créer un passage (26) prévu dans le récipient (10), **caractérisé en ce que** le poinçon (22) se déplace d'un tronçon (a) à l'intérieur d'une ouverture de buse (36), le diamètre (b1) du poinçon (22) étant choisi légèrement inférieur au diamètre le plus large (b2) d'une ouverture de buse (36) s'élargissant à la façon d'un cône, afin de doter le passage (26) d'une nervure de renfort qui présente à peu près la hauteur du tronçon (a).

5. Moule d'injection (12) selon la revendication 4, **caractérisé en ce que** le poinçon (22) est disposé dans la partie de moule (14) attribuée au côté intérieur du récipient (18).

6. Moule d'injection (12) selon la revendication 4 ou 5, **caractérisé en ce que** le poinçon (22) est disposé en face d'une buse (34) prévue pour l'arrivée de matière de moulage par injection et peut être déplacé vers cette buse ou à partir de cette buse.

7. Récipient (10) pour un appareil ménager fabriqué avec le procédé selon l'une quelconque des revendications 1 à 3, et/ou avec le moule d'injection selon l'une quelconque des revendications 5 à 7, en particulier gobelet mixeur, comprenant un passage (26) qui est prévu sur une position de consigne et est formé sur une position réelle, **caractérisé en ce que** la position réelle du passage (26) diffère de moins de ± 0,01 mm de la position théorique du passage, **caractérisé en ce que** le passage (26) présente une nervure de renfort.

8. Récipient (10) selon la revendication 7, **caractérisé en ce que** la position de consigne se situe au centre du fond de récipient (28).

9. Récipient (10) selon la revendication 7 ou 8, **caractérisé en ce que** le passage (26) est prévu comme passage circulaire.

10. Récipient (10) selon l'une quelconque des revendications 7 à 9, **caractérisé en ce que** le passage (26) est disposé sur le sommet (32) d'un dôme (30).
